# EUROPEAN PATENT APPLICATION

(11) **EP 2 418 803 A2**
(43) Date of publication of application: **15.02.2012**
(21) Application number: 11177013.7
(22) Date of filing: 09.08.2011
(51) Int. Cl.: H04L 12/24, H04W 24/00

(54) **Managed network appliance**

(30) Priority: 11.08.2010 US 372817 P
(71) Applicant: Gilat Satellite Networks, Ltd., 49130 Petah Tikva (IL)
(72) Inventor: Chatterjee, Aditya, McLean, VA Virginia 22102 (US); Kadrichu, Hanny, McLean, VA Virginia 22102 (US); Reshef, Yaron, McLean, VA Virginia 22102 (US); Katz, Glenn, McLean, VA Virginia 22102 (US); Levinberg, Amiram, McLean, VA Virginia 22102 (US)
(74) Representative: Wallin, Nicholas James

(57) **Abstract**

A network appliance may be configured to transmit data over a multiple networks from one or more client applications, for example, enterprise business applications. The network appliance may receive and analyze information regarding the multiple different networks transmitting over different transmission media, e.g., terrestrial and wireless, and to switch a client application from a primary network to a backup network based on a detected change in network availability. For example, the determination to switch transmission networks may be based on an outage of a primary network, or based on an efficiency or cost analysis, along with other factors. The network appliance may be in communication with an appliance network server, for example, to receive and compile statistics and remotely reconfigure a plurality of network appliances installed in remote locations.

## Description

### RELATED APPLICATIONS

The present application claims priority from U.S. Provisional Patent Application Serial No. 61/372,817, filed August 11, 2010, and entitled "Managed Network Appliance," the contents of which are incorporated herein by reference in their entirety for all purposes.

### FIELD OF THE INVENTION

This invention relates to the field of computer system management, and more particularly to the controlling, monitoring, and managing of systems used for communicating data via one or more computer networks.

### BACKGROUND

Many conventional network devices, such as gateways, firewalls, routers, and proxy servers, may be installed on computer systems as means of connecting multiple computer networks, and monitoring or controlling the communications between those networks. Gateways, for example, are designed to interface between multiple networks and provide for protocol translation between the networks. Firewalls are designed to block certain communications between networks while allowing other authorized communications. Firewalls are commonly installed at a local area network (LAN) operated by a corporation, educational institution, or other organization, to protect computers installed in the LAN from threats over a wide area network (WAN) outside the firewall.

However, these conventional network devices have several limitations in scope and functionality. For example, conventional network devices have no means for accessing backup networks, and thus are unable to provide network support in the event of a primary network service interruption. Additionally, conventional network devices operate independently and cannot be installed, maintained, or reconfigured, except locally at the device itself. Further, such autonomous devices are often unaware of network conditions or events occurring at other such devices at a different location in the network, and thus cannot configure their own behavior based on these remote network conditions or events. Similarly, conventional network devices lack the ability to report their own network conditions and events to other isolated devices. Furthermore, conventional network devices lack sufficient capabilities to optimally respond to changing network conditions and events, such as outages and restorations in network service, increases and decreases in network traffic and transmission delays, and power outages at the devices themselves.

### BRIEF SUMMARY

The following presents a simplified summary in order to provide a basic understanding of some aspects of the invention. The summary is not an extensive overview of the invention. It is neither intended to identify key or critical elements of the invention nor to delineate the scope of the invention. The following summary merely presents some concepts of the invention in a simplified form as a prelude to the description below.

According to certain aspects of the invention, a network appliance may be configured to transmit data over multiple networks from one or more client applications. The network appliance may be installed, for example, on a local area network (LAN) with a plurality of client servers hosting client applications. The network appliance may also be connected to one or more wide area networks (WANs), for example, a terrestrial broadband Internet connection, and/or a wireless VSAT satellite network connection. The network appliance may receive and analyze information regarding the multiple different transmission networks, may analyze and compare the networks, and may switch a client application from a primary network to a backup network. A network switching determination may be based on a detected change in network availability, for example, an outage in a primary network. The analysis and comparisons used in a network switching determination may be based on an efficiency or cost analysis, a quality of service analysis, network usage statistics, client or application preferences, along with other factors.

Accordingly to other aspects of the invention, the network appliance may be in communication with an appliance management server. An appliance management server may be associated with a plurality of network appliances, and may receive, compile, analyze network statistics, events, and security issues received from the network appliances. According to another aspect, an appliance management server may remotely reconfigure network appliances and/or client applications, for example, by transmitting software updates and network selection preferences to the network appliances.

According to yet another aspect, a network appliance may include a telephone failsafe switch for routing analog telephone calls to one of an analog terminal adapter (ATA) to support voice-over-IP (VoIP) calls, or to a public switched telephone network (PSTN). Software within the network appliance may control the telephone failsafe switch so that, for example, in the event of an IP network service interruption or a power outage at the network appliance, analog telephone calls may be completed through the PSTN.

### BRIEF DESCRIPTION OF THE DRAWINGS

Certain embodiments are illustrated by way of example and not limited in the accompanying figures in which like reference numerals indicate similar elements and in which:

FIG. 1 is a component diagram including a managed network appliance, a set of client applications, two illustrative networks, and an appliance management server, in accordance with one or more embodiments of the present invention.

FIG. 2 is a system hardware diagram of an illustrative network appliance, in accordance with one or more embodiments of the present invention.

FIG. 3 is a flow diagram illustrating a method of switching client applications from a primary network to a backup network, in accordance with one or more embodiments of the present invention.

FIG. 4 is a component diagram including an appliance management server and a plurality of managed network appliances, in accordance with one or more embodiments of the present invention.

FIG. 5A is a flow diagram illustrating a method of analyzing and reporting client application status, in accordance with one or more embodiments of the present invention.

FIG. 5B is a flow diagram illustrating a method of remotely configuring client applications, in accordance with one or more embodiments of the present invention.

FIG. 6 is a component diagram of an illustrative network appliance comprising an illustrative telephone failsafe switch, in accordance with one or more embodiments of the present invention.

### DETAILED DESCRIPTION

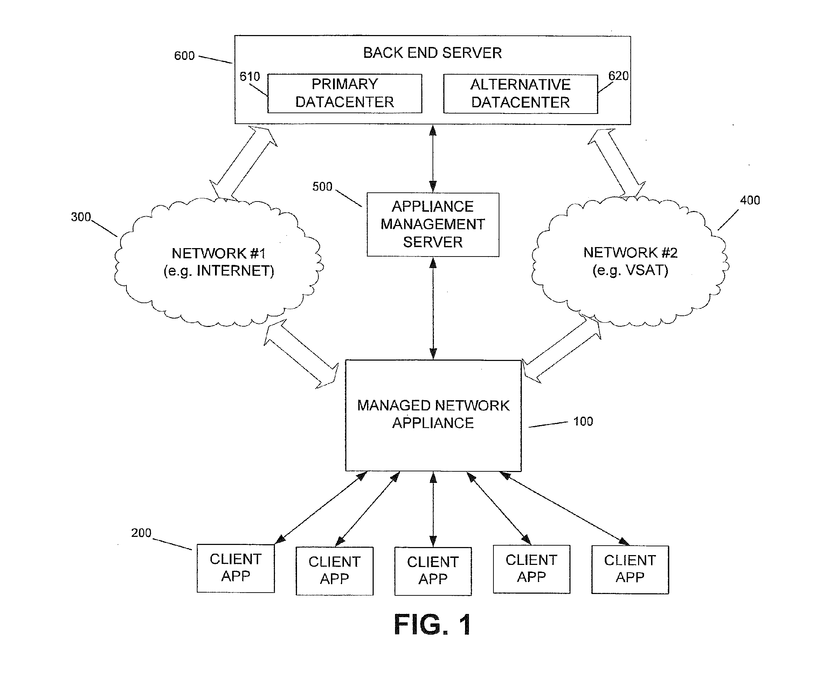

Referring to FIG. 1, an illustrative component diagram is shown including a managed network appliance 100 connected between a plurality of client applications 200 and multiple networks 300 and 400. In this example, the managed network appliance 100 in FIG. 1 is also configured to communicate with an appliance management server 500.

The managed network appliance 100 may be a computing device including one or more processors and memory storing software. Computer executable instructions and data used by the processor(s) and other components of the network appliance 100 may be stored in a storage facility such as a memory. The memory may comprise any type or combination of read only memory (ROM) modules or random access memory (RAM) modules, including both volatile and nonvolatile memory such as disks. The software of the network appliance 100 may be stored within the memory to provide instructions to the processor(s) such that when the instructions are executed, the processor(s), the network appliance 100 and/or other components of the network appliance 100 are caused to perform various functions or methods such as those described herein. Software may include both applications and operating system software, and may include code segments, instructions, applets, pre-compiled code, compiled code, computer programs, program modules, engines, program logic, and combinations thereof. Computer executable instructions and data may further be stored on computer readable media including electrically erasable programmable read-only memory (EEPROM), flash memory or other memory technology, CD-ROM, DVD or other optical disk storage, magnetic cassettes, magnetic tape, magnetic storage and the like. Some or all of the instructions implemented by processor or other components so as to carry out the operations described herein may also be stored as hard-wired instructions (e.g., logic gates). For example, the processor could include one or more application specific integrated circuits (ASICs) configured to carry out operations such as those described herein.

Although the above description of FIG. 1 generally describes a managed network appliance 100 as a single-purpose computing device, other apparatuses or devices or systems may include the same or similar components and perform the same or similar functions and methods. For example, a general purpose computer such as a commercial PC may include the components or a subset of the components described above and may be configured to perform the same or similar functions as a managed network appliance 100. Other example apparatuses that may be configured to incorporate one or more of the functions of the managed network appliance 100 include one or more terminal devices, firewall servers, personal computers, switches, or routers. Such apparatuses may include dedicated processors or programmable general purpose processors (e.g., such as those used in general computing systems). Additional or alternative components may also be included in apparatuses configured according to aspects described herein.

As shown in FIG. 1, the managed network appliance 100 may communicate with a plurality of client applications 200. One or more of the client applications 200 may correspond to software applications executing on one or more separate client servers. For example, a managed network appliance 100 installed at a client location may be connected to single client server executing the plurality of client applications 200. In other examples, the plurality of client applications 200 need not be executed on a single client server, but executed on multiple different servers across a client network. In these examples, the one or more computers executing the client applications 200 may be connected to the managed network appliance 100 by any well-known means of computer network communication. For instance, network appliance 100 may be configured to operate in a local area network (LAN) environment, for example, attaching via an Ethernet port or USB connection to a secure LAN maintained by a corporation, educational institution, or other organization. Thus, the client applications 200 may be those applications which execute on the different computers of the same LAN, and may transmit/receive their IP-based communication to/from the network appliance 100 during execution. In other examples, one or more of the client applications 200 may communicate with the network appliance 100 using other network communication techniques, for example, via one or more serial ports on the network appliance 100. Additionally, the network appliance 100 may include a Wi-Fi access point / router and may offer wireless Internet access to one or more "roaming" client applications 200 running on laptop computers, mobile phones, and other portable devices. A client application 200 may connect to the Wi-Fi access point / router using secure or unsecure connections, depending on the requirements of the application.

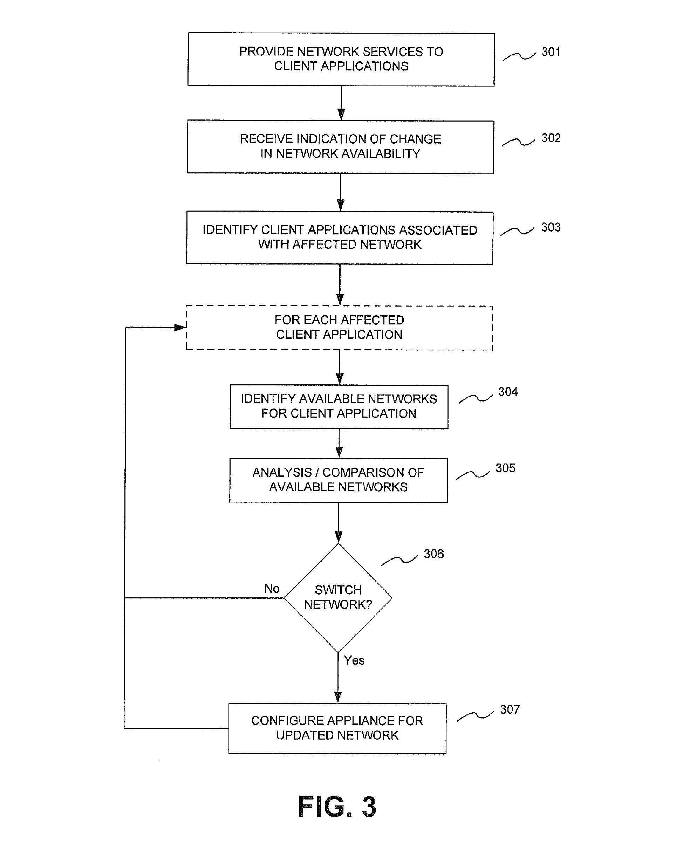

As discussed in greater detail below in reference to FIG. 3, a variety of different types of client applications 200 may be supported by the managed network appliance 100. In general, any software application that communicates with a remote server through a network appliance may be considered a client application as that term is used herein. For example,, as shown in FIG. 1, one or more of the client applications 200 may connect to a remote back-end server 600 (e.g., a customer server) having one or more data centers 610 and 620. In this example, the client applications 200 may connect to a primary data center 610 of server 600, over either of the available networks 300 or 400. Specific types of client applications 200 may include, for example, data acceleration application, retail applications (e.g., point-of-sale hardware based applications), web-based applications, Payment Card Industry (PCI) compliant applications and content delivery applications for digital media. The network appliance 100 may be configured to ensure compliance of the Payment Card Industry Data Security Standard (PCI DSS) by the client applications 200 within the cardholder data environments. Thus, the network appliance 100 may deploy one or more WLANs in cardholder data environments, may scan the environments and enforce, log, and report PCI DSS compliance by the client applications 200 within these environments. Additionally, although the example of FIG. 1 depicts client applications 200 that execute on separate computing devices, it should be understood that the client applications 200 may also be local software applications that are stored in the memory of and executed directly on the managed network appliance 100.

As further depicted in FIG. 1, the managed network appliance 100 may be connected to one or more networks 300 and 400. In this example, the network appliance 100 is connected to a first network, the Internet 300, for instance, via a DSL, cable modem, or T1. Additionally, network appliance 100 is connected to a second network, wireless network 400, for instance, via a VSAT, 3G wireless modem (e.g., EV-DO), or any other WAN. Although the network appliance 100 in this example is shown as being connected to only two networks, a network appliance 100 may potentially be connected to many more communication networks over different types of transmission media (e.g., terrestrial, wireless, etc.). For instance, a network appliance 100 may be connected simultaneously to a DSL network, an EV-DO network, and a VSAT network. In certain implementations, the network appliance 100 may include an integrated (or built in) VSAT. Thus, as shown in FIG. 1, the managed network appliance 100 may be configured to operate in multiple wide area network (WAN) environments, and may have multiple WAN interfaces to simultaneously connect to many different WANs. As in this example, the network appliance 100 may be concurrently connected to a terrestrial WAN, such as the Internet 300, and to a wireless WAN, such as the VSAT satellite network 400. Additionally, the network appliance 100 may be configured to accommodate one or more WAN modems (e.g., a VSAT modem) along with a main board in the same network appliance 100, so that these boards are completely independent and there no single point of failure. Thus, the WAN modem(s) and the main board might use separate power supplies and/or may operate so that if one or more of the WAN modems fails, the network appliance 100 would not fail, and vice versa.

As described below in reference to FIG. 3, the network appliance 100 may be configured to switch client applications 200 from one network (e.g., network 300) to another network (e.g., network 400) based on a change in the availability or performance of one or both of these networks. However, it should also be understood that the network appliance 100 may alter the network connections or other communication arrangements of the client applications 200 even if there has not been a change in the availability of any network. For example, server 600 in FIG. 1 may include a primary data center 610 for supporting client applications 200, as well as an alternative data center 620 which is provided as a backup in case of failure of the primary data center 610. In this example, if the primary data center 610 fails, the network appliance 100 may detect this failure and may initiate a new connection between, and/or may reroute communications to, the client application 200 and the alternative data center 620. For instance, an updated data center identifier may be embedded into a data transmission from a client application 200, directing the data transmission to the alternative data center 620 at the remote server 600, rather than the primary data center 610. In certain examples, the network appliance 100 may inform the client application 200 of this change, while in other examples, the network appliance 100 may be configured to automatically change switch to and from alternative back end data centers in a manner transparent to the client application 200. Additionally, the network appliance 100 may performs a switch between different back-end servers 600 and/or data centers 610 or 620 even if these servers / data centers have not completely failed. For example, the network appliance 100 may be configured to detect noticeable increases or decreases in performance of back-end servers (e.g., server 600) and/or data centers (e.g., data centers 610 and 620), and may switch or reconfigure the network connections and communications arrangements for the client applications 200 based on the detected changes.

As described below in greater detail in reference to FIG. 3, the device architecture and configuration described in FIG. 1 may allow the network appliance 100 to provide several different WAN alternatives to the client applications 200, and may provide the functionality to switch between the different WANs and/or to support hybrid networks by directing a first portion of the communications from a client application 200 to a first WAN and a second portion of the communications from the client application 200 to a second WAN.

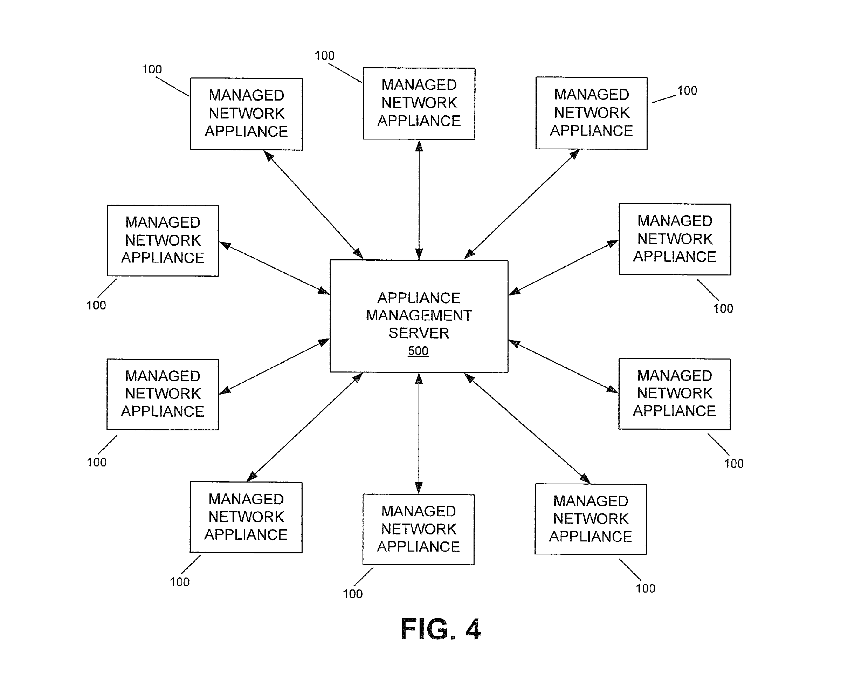

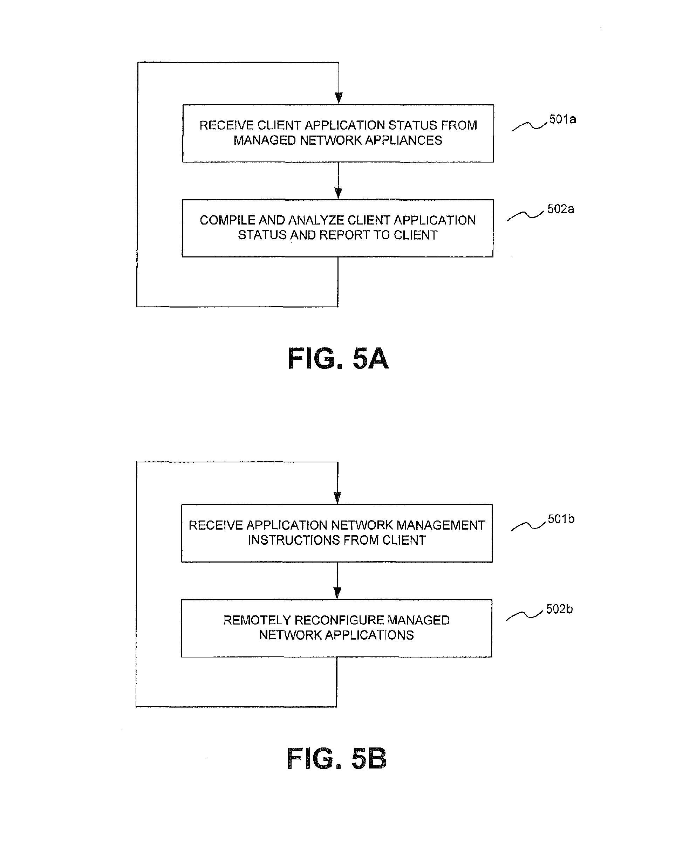

As mentioned above, the network appliance 100 may also be configured to communicate with an appliance management server 500. The appliance management server 500 may be connected to one or more network appliances 100 to provide centralized management capabilities, including software configuration, customization, updates, and maintenance. Appliance management servers 500, and examples of different possible types of communications between network appliances 100 and appliance management servers 500, are described below in greater detail in reference to FIGS. 4 and 5. The connection between the network appliance 100 and the appliance management servers 500 may use one of the WANs 300 or 400, or may be based on different communication networks or techniques separate from the WAN links of the network appliance 100. For example, a virtual private network (VPN) connection may be used for communications between the between the network appliance 100 and the management server 500.

Similarly, in managed network appliances 100, the communications between an appliance management server 500 and a network appliance 100 may be as frequent or as infrequent as deemed appropriated based on the network availability and functional requirements of the system. For example, a management server 500 may periodically initiate a connection with its network appliances 100 (or vice-versa) according to a predetermined schedule (e.g., every hour), to determine the health and operational status of the network appliances 100. As another example, a management server 500 might not use a predetermined schedule, but may initiate communication with its network appliances 100 on an event basis. For instance, a client may request a status update or a configuration of a certain network appliance 100, thus prompting an operator of the management server 500 to initiate a connection with the requested network appliance(s) 100 to perform the requested task. Another event-prompting communication may be, for example, the release of a software update relevant to a network appliance 100 and/or one of its client applications 200. Event-based communications may be initiated by the network appliance 100 as well. For example, a network appliance 100 may detect a security threat at the network appliance 100 and/or one of its client applications 200, and may initiate communication to the management server 500 to report the security threat. A network appliance 100 may also initiate communication with the management server 500 to report network usage and performance statistics, network usage events (e.g., exceeding an allowable bandwidth, a network failure, or a switchover or switchback as described below in FIG. 3).

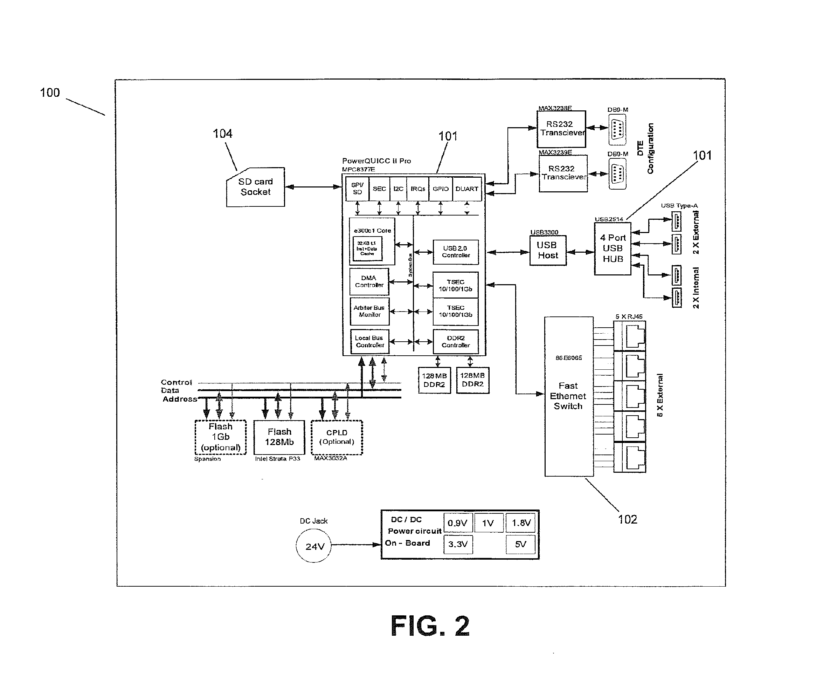

Referring now to Fig. 2, a system hardware diagram is shown for an illustrative managed network appliance 100. The diagram in Fig. 2 includes the following component blocks:
A processor, for example, a POWERQUICC II Pro Processor;
An Ethernet switch, for example, a 6 or 10 port fast Ethernet switch;
A plurality of LAN Ports configured to interface with the Ethernet switch;
A USB hub, for example, a 4 hub USB port, and corresponding USB ports;
An SD card interface, for example, a MICROSD interface;
An SD card, for example, a 32GB SD card to be used as a mass storage device of the network appliance 100;
A flash memory, for example, a 64 MB on-board flash memory;
A DDRII, for example, a 256 MB RAM;
A modem, for example, a USB modem or CONEXANT modem;
A Wi-Fi Access Point/Router;
An analog terminal adapter (ATA) configured to support voice-over-IP (VoIP); and
A failsafe switch configured to relay between an analog phone line and the ATA.
It should be understood that the hardware components shown in Fig. 2 are merely illustrative for the purposes of this example. Many of the components described may be optionally and/or may be used in various combinations in other embodiments.

Referring now to Fig. 3, a flow diagram is shown illustrating a technique of switching client applications from a first network (e.g., primary network) to a second network (e.g., backup network), and/or a third network (e.g., second backup network), etc., in accordance with one or more aspects of the present invention. In this example, described below, the steps of FIG. 3 may be performed by a network appliance such as the managed network appliance 100 depicted in FIG. 1. Thus, the network appliance 100 may be configured to support a plurality of client applications 200 by transmitting and receiving communications from the client applications 200 via networks 300 and 400. Additionally, as described above, the network appliance 100 may be a managed device, for example, via a connection to an appliance management server 500, or may operate autonomously without being connected to a management server 500 (e.g., a locally managed network appliance 100).

At step 301, the network appliance 100 has been installed and is providing network services to one or more of its associated client applications 200. As shown in the example architecture of FIG. 1, the network appliance 100 may be connected to a plurality of client applications 200 (e.g., via a LAN) and may route transmission from the client applications to one of multiple different communication networks (e.g., WANs 300, 400). In certain examples, all of the transmissions from each of the client applications 200 may be transmitted over a single primary network, for instance, the broadband connection to the Internet 300. In other examples, the transmissions from certain client applications 200 may be transmitted to one network, while the transmissions from other client applications 200 are transmitted to a second network. In still other examples, a client application 200 may transmit a portion of its communications over one network and another portion of its communications over another network. As discussed below, this determination may be based on the requirements of the individual client applications 200, the recipient of the communications, cost or efficiency considerations, or based on client preferences. Additionally, certain applications 200 might not be compatible with certain networks, for example, if an intended recipient of a transmission from a client application 200 is not connected to that network, or if a secure nature of a transmission is not permitted over certain network or transmission media.

While providing network services to its client applications 200, the network appliance 100 in this example may receive a transmission from a client application 200 and may identify the client application 200 based on an IP signature of the transmission. Thus, the network appliance 100 may be able to determine the sender application of a particular transmission received over a LAN, and may select the desired WAN network 300 or 400 based on which client application 200 initiated the transmission. In certain examples, a series of identifiers may be stored associating different client applications 200 with different transmission networks. For instance, a network appliance 100 may store a table listing each of its known client applications 200, along with a network identifier corresponding to the WAN network over which transmissions from that client application 200 should be transmitted. As discussed below, in certain examples a plurality of network identifiers may be stored for each client application 200, for example, an identifier for a preferred (or primary) transmission network, an identifier for a first backup (or secondary) transmission network, an identifier for a second backup (or tertiary) transmission network, and so on. Additionally, multiple network identifiers may be stored for different types of communications transmitted by a client application 200. For example, a first network identifier may correspond to the secure or critical transmissions sent by a client application 200, while a second network identifier may correspond to unsecure or less critical transmissions by the same client application 200. Additionally, the network appliance 100 may be able to identify one or more latency limits associated with the network identifiers sent by the client applications 200. Each client application 200 may have one or more network identifiers that correspond to different latency limits, thus allowing the network appliance 100 to detect those latency limits and choose a more appropriate transmission media for the client applications 200.

Additionally, a network appliance 100 may be configured to detect transmissions from a new client application 200. For example, if a transmission is received by the network appliance 100 via the LAN from a client application 200 having an unrecognized IP signature, the network appliance 100 may determine that the transmitter is a new client application 200. A transmission network, or combination of transmission networks, may be selected for the new client application, for example, based on the requirements of the new client application, or based on a default WAN determined based on the preferences of the client or the network appliance. For instance, a network appliance 100 may designate a terrestrial broadband Internet connection as the primary transmission network for all new client applications 200, and may designate a wireless network (e.g., VSAT) as a backup network. However, in certain examples, a new client application 200 may also select its own transmission network(s) through a separate set of explicit instructions sent to the network appliance 100. After a new client application 200 is identified, and the transmission networks for the application are selected, the network appliance 100 may add the new client application and selected transmission networks to an existing list of client applications as described above.

In step 302, an indication is received of a change in the availability of one of the communication networks accessible by the network appliance 100. For example, the network appliance 100 may detect a network outage or performance degradation in the broadband Internet WAN 300 connected to the appliance 100. In certain embodiments, the network appliance 100 may periodically send test transmissions over each of its WAN connections to detect network any network outages, delays, performance degradation, and other network failures. In other embodiments, the indication may be received from an external source, for example, a management server 500 or a local user of the network appliance 100. For instance, the management server 500, through its communications with other network appliances, may identify network delays in a WAN and may contact the network appliance 100 to inform it of those delays.

Thus, although a change in the availability of a communication network may correspond to a network outage, it may also correspond to other conditions, such as an increase in the traffic or delays on a network, or a decrease in connection quality. Alternatively, a change in the availability may correspond to additional availability, not less availability, for a network. For example, an indication may be received, or detected, that a previous network outage has been corrected and/or that a network connection has been restored. Additionally, the indication may indicate less traffic over a network, higher network quality, fewer delays, etc.

In step 303, one or more client applications associated with the affected network are identified. For example, if in step 302 an indication is received that the network appliance 100 has temporarily lost its terrestrial broadband Internet connection 300, then a list of the client applications 200 that transmit over network 300 may be identified in step 303. As discussed below in steps 304-307, the client applications 200 identified in this step may be switched to backup networks and/or other alternative network communication arrangements may be determined. Thus, as in this example, the list of client applications 200 identified in step 303 may correspond to those client applications having the affected network as its primary transmission network. However, in other examples, the list of client applications identified in step 303 as potentially requiring a change in network may include an additional set of applications besides those transmitting primarily over the affected WAN. For example, it may be desired to perform an analysis and potentially reconfigure all client applications 200 communicating through the network appliance 100, regardless of whether the applications use the affected network. For instance, it may be determined that even though a first client application 200 would not be directly affected by a network outage, it would be indirectly affected after other applications were switched onto its primary network. Such a holistic approach may consider the effect of the change in availability of the affected network on all of the client applications 200 transmitting through the network appliance 100, and may even consider applications transmitting through other network appliances 100 and other devices, before determining what changes to make in the configuration of the client applications 200 and the network appliance 100. Thus, the list of client applications 200 identified in step 303 may comprise all of the applications associated with the network appliance 100. In other examples, the list may include all client applications capable of transmitting over the affected network, even if they are not currently configured to do so, or even though the affected network is not the primary transmission network for the application 200.

In the example shown in FIG. 3, steps 304-307 may be performed separately for each of the affected client applications 200 identified in step 303. Thus, as described below, the analyses and determinations with regard to switching networks may be different for different client applications 200. In other examples, the functions in conceptual steps 304-307 need not be performed separately for each client application 200, but may be performed collectively. For instance, a network appliance 100 may implement an overall client strategy (or overall appliance strategy) based the change in the availability of the affected network, and may make network switching determinations for the individual client applications 200 based on the overall strategy.

In step 304, the available networks for a client application 200 associated with the affected network are identified. As an example, if a network outage has occurred in the primary transmission network for client application 200, then in step 304 a list of available backup networks may be determined for that client application 200. A potential backup network for a client application 200 may be determined by the client application, by the client itself, or by the network appliance 100. Thus, referring back to the example of FIG. 1, the network 300 (e.g., the Internet) may be an available backup for network 400 (e.g., a VSAT network), and vice versa. Of course, in other examples additional and/or different networks of different types may be available as backups. Further, as mentioned above, a VPN connection (or other network connection) may be maintained between the network appliance 100 and the management server 500. This VPN connection also may be used to transmit data between a client application 200 and a back-end server 600. Thus, although not shown in FIG. 1, a VPN connection (or other connection) between the network appliance 100 and the management server 500 may be used as an available backup network connecting client applications 200 with back-end servers 600. A VPN between a network appliance 100 and a management server 500 may also be a primary network for one or more client applications 200, for example, to provide additional security to the network communications of the client applications 200.

As mentioned above, certain client applications 200 may be configured to transmit over a single WAN only. For example, based on the functional requirements of the client application 200, the geographic location or network limitations of the recipient, or based on security, cost, or efficiency considerations, an alternative WAN (even if available on the network appliance 100) might not be considered an available network for that particular client application 200. In this example, if there were a network outage in the primary WAN of the client application 200, no other networks would be identified as available networks and the client application would not be switched over to any backup network even if it would be technically possible to switch the client application 200 to such a backup network. However, for other client applications 200, suitable backup networks may be identified as available networks in step 304. In fact, for certain client applications 200, a backup network may be just as desirable to the application as a primary network, and the application may have no preference regarding which WAN is used.

As discussed above, in certain embodiments, a list of network identifiers may be stored (e.g., in the memory of the network appliance 100, or in the memory of an appliance management server 500, etc.) corresponding to a list of backup networks for each of the client applications 200 of the network appliance 100. Thus, determining the available networks for a client application 200 in step 304 may comprise accessing the previously stored list of network identifiers for that client application.

In other examples, the determination of available networks for a client application 200 may be complex and may depend on various additional factors. For example, certain client applications 200 may be able to transmit a portion of their transmissions over a backup network, but not other portions of their transmissions. Additionally, certain networks may be able to transmit over alternative networks, but may prefer not to, for example, because of cost considerations, excess network usage charges, or security concerns. As another example, a client application 200 may prefer to use a backup or alternate network for critical communications (e.g., reporting security intrusions) or during important communication times (e.g., verifying a financial transaction at a point-of-sale location), but might not prefer to use the backup or alternate network for less critical communications (e.g., transmitting monthly sales figures, transaction log data, or performing routine maintenance). Thus, in step 304, whether or not a potential backup network is considered to be an available network may depend on the state of the backup network (e.g., an amount of network traffic over the backup network), the previous network usage of the client application 200 or other applications of the same client and/or communicating through the same network appliance 100, and a current execution state of the client application 200 (e.g., current operation schedule, amount of data to be transmitted, or an importance level of pending communications to be transmitted/received, etc.).

As mentioned above, step 304 may be performed even for those client applications 200 that do not use the affected network as their primary transmission network. For example, if the primary network for a client application 200 is not affected, but a backup network is the affected network, step 304 may involve identifying a different network as a backup network.

In step 305, the available networks identified for the client application 200 are analyzed and compared. In certain embodiments, the analyses and comparisons in step 305 may be simplistic, or may be altogether unnecessary. For example, if only a single backup network is identified in step 304, then a comparison among multiple networked need not be performed in step 305. In other examples, if a list of network identifiers has been previously stored for a client application 200, and the list has been ordered according to the client application's preference of backup networks, then the analysis/comparison of step 305 may simply comprise selecting the first available network from the ordered list.

However, in other examples, multiple available networks may be identified in step 304, and in step 305 those networks may be analyzed and compared to determine a preferred network for the client application 200. For example, if the primary transmission network for a client application 200 has suffered an outage or a degradation in the quality of service in step 302, then a list multiple potential backup networks may be identified in step 304. Then, in step 305, the potential backup networks may be analyzed and compared according to, for example, the cost and/or efficiency of transmitting over the potential backup networks, the quality of service over the potential backup networks, the amount of current network traffic on each of the potential backup networks, any preferences of the client application or the client, and/or a number of additional factors, to determine a preferred backup network.

Additionally, the analysis in step 305 may be different for different client applications 200. As discussed above, different client applications 200 may have different functional requirements, and thus may have similarly different priorities for comparing available networks. For example, for a first client application 200, when comparing available networks to select a backup network in step 305, a transmission cost analysis may be preferred if the client application 200 transmits a relatively large amount of non-critical data. However, a quality of service analysis may be preferred for a second client application 200 that transmits highly critical data but less overall data. Additionally, the analysis in step 305 may depend on a current state of execution of the client application 200. For instance, if the client application 200 is in a critical state of operation at the time of a network outage, then a quality of service analysis may be preferred, however, if the same client application 200 is in a non-critical state at the time of a network outage, then a cost or efficiency analysis may be used instead (or in addition to).

In step 306, the determination is made whether or not to switch the client application 200 to a different network or networks at the network appliance 100. If the determination is made to switch a client application 200 to a different network (306:Yes), then in step 307, the network appliance 100 is configured to update the networks associated with the client application 200. Of course, if the determination is made not to switch a client application 200 to a different network (306:No), then step 307 need not be performed for that client application 200.

Therefore, in step 306, a client application 200 may be effectively switched to a backup network, for example, following a network outage of the application's primary WAN. In certain examples, switching a client application 200 to a different network may include updating a network identifier stored at the network appliance 100. Thereafter, the network appliance 100 may then retrieve updated network identifier upon receiving a new outbound transmission from the client application 200 and use the updated network identifier to route the transmission to the backup WAN. This example may be characterized as a so-called "failswitch" process responding to a network outage (or other change in the availability or performance of a network). However, it should be understood that a similar process may be used to perform so-called "switchbacks." That is, after a previously lost connection to a primary network is restored, the network switching in step 307 may correspond to switching a client application 200 from its backup network back to its original primary transmission network.

In certain embodiments, the network switching process of FIG. 3 of may be performed by the network appliance 100 (e.g., with the assistance of a management server 500) in a manner such that the network is switch transparent to the client application 200. Thus, a client application 200 may continue to operate normally oblivious to a network outage. However, in other embodiments, the client application 200 may be made aware of the network outage and/or may be involved in the analysis used to make the switching determination, for example, by providing information about its transmission recipients, anticipated network usage, security requirements, sensitivity of transmitted information, etc. In other examples, the client application 200 might not be involved in the analysis of and determination of the switching process, but it may be informed after a network switch has been performed. In such examples, the client application 200 may be optionally configured or programmed to alter its transmitting behavior based on the switch between transmission networks. For instance, a client application 200 may be programmed to transmit information at a slower rate, or to transmit information in a different manner, when transmitting over a backup network.

Additionally, some client application 200, such as VoIP, might not be supported by certain backup networks, for example, a dial-up network. In such instances, if the network appliance 100 needs to switch to a backup network (e.g., due to failure of a primary network), and a client application 200 requests services that cannot be provided by the current available networks, the network appliance 100 may reject the requests from the client application.

Referring now to Fig. 4, a component diagram is shown including a managed appliance network, including an appliance management server 500 and a plurality of a managed network appliances 100. As FIG. 4 conceptually illustrates, the appliance management server 500, which may comprise a single computer server or combination of computer servers in one or more physical locations, may be centrally located within the managed appliance network and may be in communication with a plurality of independent managed network appliances 100. In this example, the managed network appliances 100 in the network may be spread across many remote geographic locations, for example, client sites, and may be accessible by different networks and different combinations of network media (e.g. terrestrial, wireless, etc.). The managed network appliances 100 may be operated and maintained independently by operators at the remote locations. However, the structure of the network in FIG. 4 may permit the appliance management server 500 to provide centralized management capabilities, including software configuration, customization, updates, and maintenance. For example, the appliance management server 500 may ensure that the software operating on the network appliances 100 is current and may repair it remotely when possible. The appliance management server 500 may also install additional software or modify the software at a particular network appliance 100, but not necessarily all of the other network appliances, based on a request by a client controlling the client applications that communicate through the particular network appliance 100.

One important role of the appliance management server 500 is to authenticate and control the configuration of the network appliances 100. In certain examples, a network appliance 100 might not be configured out of the box to support some or all client applications 200. For instance, the network appliances 100 might only be able to establish a connection to the appliance management server 500, and register and retrieve its configuration data. In some cases, the appliance management server 500 may require that network appliances 100 authenticate themselves with the server 500 before providing any configuration data or other information to the network appliances 100.

Additionally, when maintenance is to be performed on a network appliance 100, the appliance management sever 500 may change the status of the network appliance 100. Therefore, if the network appliance 100 needs to be swapped with a replacement appliance 100, the replacement appliance 100 may be able to register with the appliance management server 500 to provide services to the client applications 200.

Additionally, an appliance management server 500 may be used to receive, compile, analyze, and report the network communication activities occurring at the plurality of network appliances 100, as described below in FIG. 5A, and may remotely configure some or all of the network appliances 100, as described below in FIG. 5B.

Referring now to FIG. 5A, a flow diagram is shown illustrating a method of analyzing and reporting, at an appliance management server 500, the status of client applications 200 operating at a plurality of network appliances 100. In step 501a, an appliance management server 500 receives status updates from one or more network appliances 100. The status updates may be received by a plurality of different network appliances 100 and may correspond to status information for a plurality of different client applications 200 at the different network appliances. The status information may include networks status (e.g. which of the network appliance 100 WAN connection is up or down), quality of networks connections, network usage information, for example, an amount of data transmitted or received, or a number of transactions completed and with whom, for each client application 200 over a specified period of time. Additional information may include a list of the different transmission networks that a network appliance 100 and/or client application 200 has been using (e.g., DSL, cable, T1, VSAT, 3G, EV-DO, dial-up), and how much each network has been used by the network appliance 100 or client application 200. Thus, the status information received by the appliance management server 500 in step 501a may be statistical data based on the network traffic associated with certain network appliances 100 or certain client applications 200, which may be detected at the network appliance 100 or by the applications 200 themselves. In other examples, the status information may correspond to an event trigger associated with a client application 200, for example, when the client application 200 switches between a first to a second transmission network, or when a certain predetermined network usage threshold is obtained by the client application 200. Additionally, the network appliance 100 may report status and statistical information regarding the client applications 200 being served by the appliance 100. Such information may include, for example, which client applications 200 are/were active and at what times, what resources are/were being used by these client applications 200, the average latency per client application 200 over the network, certain problematic client applications 200, or trends in certain client applications 200, etc. Additionally, as discussed above, the network appliance 100 may be configured to ensure the PCI compliance of its client applications 200. Therefore, in some examples, the status and statistical information received regarding the client applications 200 in step 501a may include the PCI compliance log information for the client applications 200 of the network appliances 100.

In step 502a, after receiving client status information from the network appliances 100, the appliance management server 500 may perform a compilation and analysis of the status information and may provide the client with a notification, summary, or other report to describe the data. The management server 500 may generate reports and/or statistics for an individual network appliance 100, an individual client application 200, for a specific client base (e.g., all network appliances 100 or client applications 200 associated with a client), for all client applications 200 of a unique signature, or for all appliances 100 and all clients within the network of the management server 500. Additionally, the compiled status and statistical data may be provided back to one or more of the network appliances 100 in addition to (or instead of) providing this data to the specific client, so that the network appliances 100 can review and "learn from" (e.g., reconfigure their switching determinations) based on the status and statistical data of other network appliances 100. In certain embodiments, the management server 500 may generate reports/statistics according to a predetermined schedule and predetermined method of reporting (e.g., email, phone, SMS). For example, status reports may be automatically generated by the server 500 for one or more of the network appliances 100 on a fixed time interval (e.g., hourly, daily, weekly, monthly, yearly, etc.) and reported to clients via a standard reporting method (e.g., email). In other embodiments, the management server 500 may generate reports and/or statistics based on the triggering of an event, for example, a switchover of a client application from one transmission network or media to different transmission network or media, and may report the event to clients using a different method of reporting (e.g., phone, SMS). Report / statistics generation may also be triggered automatically based on the triggering of even at a network appliance 100 or based on receiving certain predetermined status information.

In a similar example to that shown in Fig. 5A, appliance management server 500 may be used to report security issues to clients. For instance, if a computer virus, physical intrusion, or other security related matter affects client hardware or a client application 200, the managed network appliance 100 may detect the security issue and report it to the appliance management server 500. In certain instances, the client application 200 may be unable to detect and/or report the security issue. For example, a computer virus affecting a client application 200 may operate in such a manner that the client application 200 is unaware of the virus. Additionally, a security intrusion may render the client application 200 unable to communicate with a central client server to report the problem. However, certain security issues affecting the client application 200 may be detected by the network appliance 100, for example, based on changes in network usage patterns by a client application 200. After the appliance management server 500 receives the indication of the security issue, it may optional analyze and/or compile this data into a security report, and then report the security issue to the appropriate client. As in the above example, reporting security issues to a client may be performed via email, phone, SMS, or any other well-known technique.

Referring now to FIG. 5B, a flow diagram is shown illustrating a method of remotely configuring a plurality of network appliances 100. As described above in reference to FIG. 5A, it may be advantageous for clients in certain scenarios to communicate with a single management server 500 rather than a plurality of network appliances 100 installed in different remote locations. Thus, as shown in FIG. 5B, an appliance management server 500 may be used to configure one or more network appliances 100 based on the instructions of a client. In step 501b, the appliance management server 500 receives instructions from a client relating to the operation of the client's applications 200 and/or one or more managed network appliances 100 installed at a client location. The client may provide the instructions to an operator of the management server 500 using conventional means, for example, telephone, email, etc. For instance, a client may inform the management server 500 of an attempt to lower the amount of data transmitted over a particular WAN network (e.g., a VSAT satellite network) based on cost or efficiency considerations. As another example, a client may request at the management server 500 to receive statistics from its plurality of network appliances 100 at a different rate, or to request that the statistical reports received from the network appliances 100 contain different information. Accordingly, in step 502b, the appliance management server 500 remotely configures (or reconfigures) the relevant network appliances 100 based on the client's instructions. Step 502b may include first identifying a subset of the network appliances 100 managed by the appliance management server 500 that are affected by the client's instructions. Thus, it might not be necessary to transmit the same set of instructions to all network appliances 100. The instructions transmitted may take the form of reconfiguration parameters, software updates, or the like. Additionally, although the instructions sent by the management server 500 may be transmitted to the network appliances 100, in certain embodiments the instructions may be intended for the client applications 200 themselves. Thus, the network appliances 100 may be configured to forward software updates, network selection preference parameters, etc., received from the management server 500 to one or more of its client applications 200.

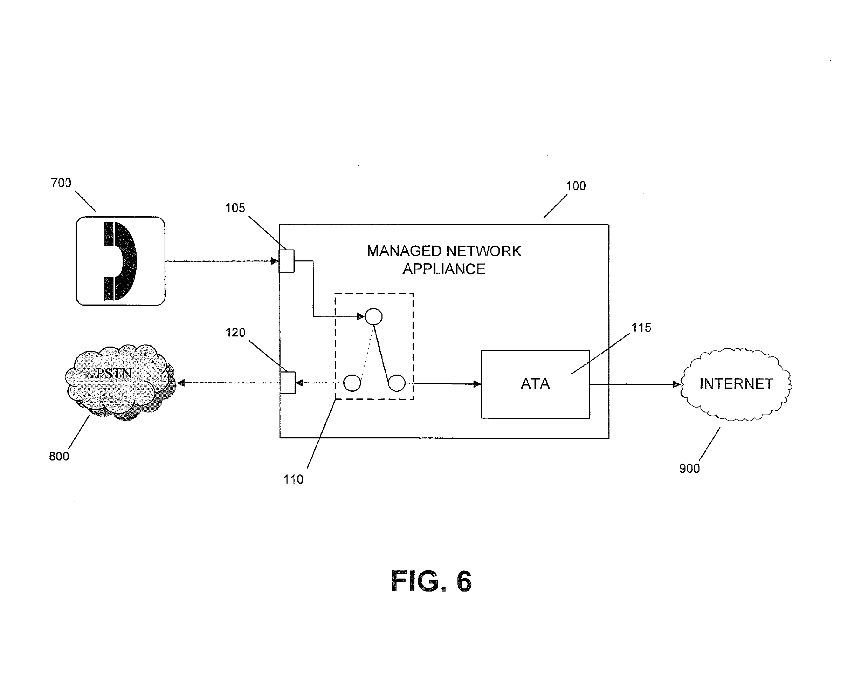

Referring now to Fig. 6, a component diagram is shown illustrating a network appliance 100 comprising an illustrative telephone failsafe switch 110. In this example, the failsafe switch 110 may be controlled by the software executing on the network appliance 100 to control the routing of an analog telephone call received at the network appliance 100. As discussed above, certain network appliances 100 may include an analog phone port 105 for receiving or transmitting analog data. One potential use for the analog phone port 105 is to allow the voice-over-IP (VoIP) telephone calls to be placed through the network appliance 100. In order to process a VoIP telephone call, the network appliance 100 receives a call from a standard analog telephone 700, and routes the analog data through the analog terminal adapter (ATA) 115, after which the digital data may be transmitted as IP packets over the network appliance's 100 digital network connection (e.g., broadband Internet 900). Thus, analog telephone calls may be received and VoIP calls may be processed even without a failsafe switch 110.

However, as discussed above, for any number of reasons the digital network connection of the network appliance 100 may become unavailable. For example, the network appliance 100 may suffer an outage of the broadband network 900, or may lose network performance quality due to excess network traffic, or may have VoIP provider infrastructure (e.g., soft switch, front end etc.) fail, or may voluntarily divert network traffic away from the digital broadband network 900due to high network traffic, excess usage fees, etc. If the digital network connection of the network appliance 100 becomes unavailable, the network appliance 100 may be unable to transmit a VoIP phone call. Additionally, if the digital broadband network 900remains operational, but the VoIP server (e.g., soft switch) cannot be accessed, then the network appliance 100 may be unable to transmit a VoIP phone call.

Thus, in this example the network appliance 100 comprises a telephone failsafe switch 110. The software of the network appliance 100 may control the switch 110 to route incoming analog calls either to the ATA 115 for VoIP calls, or immediately back out of the network appliance 100 via PSTN port 120 to a public switched telephone network (PSTN) 800. Therefore, if the network appliance 100 detects that the digital network 900 is unavailable, or otherwise decides not to route the analog call to the ATA, then the analog call may nonetheless be completed via the PSTN 800 without a detectable interruption of service. Additionally, the hardware and/or software of the network appliance 100 may be configured to engage the telephone failsafe switch 110 in event of a power loss or other system failure at the network appliance 100 itself, to route incoming analog calls directly to the PSTN 800. Thus, a power loss or other outage affecting the network appliance 100 need not affect the ability of users of the network appliance 100 to continue to place analog calls.

In certain examples, the software of the network appliance 100 controlling the failsafe switch 110 may be configured to connect the analog phone port 105 to the PSTN port 120 as soon as the network appliance 100 is powered on, and during the boot time following start up. After the network appliance 100 is booted up, the software may periodically (e.g., every 30 seconds) check the status of the digital network (e.g., the connection of a DSL line to the Internet 900). The software may also periodically (e.g., every 30 seconds) check the status of the ATA 115 and the VoIP provider soft switch that controls VoIP routing, and may control the failsafe switch 110 according to the following chart:

| DSL link status | ATA status | VoIP Server status | New phone switch position |
|---|---|---|---|
| Down | N/A | N/A | Route phone to PSTN |
| Up | Down | N/A | Route phone to PSTN |
| Up | Up | Down | Route phone to PSTN |
| Up | Up | Up | Route phone to ATA |

In certain embodiments, the software controlling the failsafe switch 110 may be configured to operate in two or more separate modes. For example, a normal operation mode as described above, and a diagnostic (or manual) mode that allows a tester of the network appliance 100 to directly control the connection of the analog phone port 105 to either the ATA 115 or the PSTN port 120. In a diagnostic mode or other manual mode, if the failsafe switch 110 is set to the PSTN port 120, then the analog port 105 will be routed to the PSTN port 120 regardless of the status of either the digital network connection (e.g., DSL link) or the ATA link status.

In some examples, the network appliance 100 may support a remote command, for example, a command arriving through a broadband connection VPN tunnel, to control the position of the failsafe switch 110. Thus, an administrator at the appliance management server 500, or other network operator may enable or disable the use of VoIP at the network appliance 100. This may be done, for example, at the request of a client, based on a new telephone number being assigned to or removed from a client's VoIP network.

Additionally, the network appliance 100 may support a local command, for example, from a PC connected to a local LAN port of the network appliance 100 to control the position of the failsafe switch 110. Thus, a local user (e.g., installer, maintenance personnel) may have the ability to test the operation of VoIP functionality during installation or maintenance. In further embodiments, the network appliance 100 may be configured with either a default position for the failsafe switch 110, or may be configured to allow manual (e.g., physical) configuration of the position of the failsafe switch 110. In some examples, the manual configuration of the failsafe switch 110 may override a remote command (via the Internet) or a local command (via the LAN) to control the failsafe switch 110.

As will be appreciated by one of skill in the art upon reading the following disclosure, various aspects described herein may be embodied as methods, systems, apparatus, and/or computer program product. Accordingly, those aspects may take the form of an entirely hardware embodiment, an entirely software embodiment or an embodiment combining software and hardware aspects. Furthermore, such aspects may take the form of a computer program product stored by one or more computer-readable storage media having computer-readable program code, or instructions, embodied in or on the storage media. Any suitable computer readable storage media may be utilized, including hard disks, CD-ROMs, optical storage devices, magnetic storage devices, flash memory drives, and/or any combination thereof. In addition, various signals representing data or events as described herein may be transferred between a source and a destination in the form of electromagnetic waves traveling through signal-conducting media such as metal wires, optical fibers, and/or wireless transmission media (e.g., air and/or space).

There follows a series of numbered features defining particular aspects and preferred optional features of embodiments of the invention. Where a numbered feature refers to one or more earlier numbered features then those features may be combined in accordance with the reference.
1. A method comprising:
   receiving, at a network appliance, an indication of a change in the availability or performance of a first network having a first transmission medium;
   identifying a first client application associated with the first network;
   determining a second network associated with the first client application having a second transmission medium different from the first transmission medium;
   updating a network identifier associated with the first client application to correspond to the second network;
   receiving, at the network appliance, a first transmission comprising first data from the first client application;
   retrieving the network identifier associated with the first client application; and
   based on said network identifier associated with the first client application, transmitting by the network appliance said first data over the second network.
2. The method of feature 1, wherein the first network is a terrestrial network and the second network is a wireless network.
3. The method of feature 2, wherein receiving the indication of a change in the availability of the first network comprises detecting either an outage or a performance degradation in the terrestrial network.
4. The method of any of features 1 to 3, wherein determining the second network for the first client application is performed based on an amount of network usage of the first client application.
5. The method of any of features 1 to 4, wherein the indication of a change in the availability of the first network corresponds to a decrease in the availability of the first network, the method further comprising:
   after transmitting said first data over the second network, receiving an indication of an increase in the availability of the first network; and
   updating the network identifier associated with the first client application to correspond to said first network.
6. The method of any of features 1 to 5, further comprising:
   prior to determining the second network for the first client application, receiving an indication of an overall usage level for the second network from a network monitoring device.
7. The method of any of features 1 to 6, wherein determining the second network for the first client application is based on a determination that the first client application can be operated over to the second network and that a second client application cannot be operated over the second network.
8. The method of any of features 1 to 7, further comprising:
   identifying the first transmission from the first client application by matching a Internet protocol (IP) signature of the first transmission with an IP signature of a previous transmission from the first client application, wherein the IP signature of the first client application differs from an IP signature of a second client application.
9. The method of any of features 1 to 8, wherein the first client application is not notified of the change in the availability of the first network, and is not notified that the first data was transmitted over the second network.
10. The method of any of features 1 to 9, wherein receiving the indication of a change in the availability of a first network comprises performing at least one of an efficiency analysis and a least cost analysis between the first network and the second network for the first client application.
11. A network appliance comprising:
   at least one processor; a
   a plurality of network interfaces; and
   at least one memory storing computer readable instructions that, when executed, cause the network appliance to:
      receive an indication of a change in the availability of a first network having a first transmission medium;
      identify a first client application associated with the first network;
      determine a second network associated with the first client application having a second transmission medium different from the first transmission medium;
      update a network identifier associated with the first client application to correspond to said second network;
      receive a first transmission comprising first data from the first client application;
      retrieve the network identifier associated with the first client application; and
      based on said network identifier associated with the first client application, transmit said first data over the second network.
12. The network appliance of feature 11, wherein the first network is a terrestrial network and the second network is a wireless network.
13. The network appliance of feature 12, wherein receiving the indication of a change in the availability of the first network comprises detecting an outage in the terrestrial network.
14. The network appliance of any of features 11 to 13, wherein determining the second network for the first client application is performed based on an amount of network usage of the first client application.
15. The network appliance of any of features 11 to 14, wherein the indication of a change in the availability of the first network corresponds to a decrease in the availability of the first network, and wherein the computer readable instructions, when executed, further cause the network appliance to:
   receive an indication of an increase in the availability of the first network after transmitting said first data over the second network; and
   update the network identifier associated with the first client application to correspond to said first network.
16. The network appliance of any of features 11 to 15, wherein the computer readable instructions, when executed, further cause the network appliance to:
   receive an indication of an overall usage level for the second network from a network monitoring device prior to determining the second network for the first client application.
17. The network appliance of any of features 11 to 16, wherein determining the second network for the first client application is based on a determination that the first client application can be operated over to the second network and that a second client application cannot be operated over the second network.
18. The network appliance of any of features 11 to 17, wherein the computer readable instructions, when executed, further cause the network appliance to:
   identify the first transmission from the first client application by matching a Internet protocol (IP) signature of the first transmission with an IP signature of a previous transmission from the first client application, wherein the IP signature of the first client application differs from an IP signature of a second client application.
19. The network appliance of any of features 11 to 18, wherein the first client application is not notified of the change in the availability of the first network, and is not notified that the first data was transmitted over the second network.
20. The network appliance of any of features 11 to 19, wherein receiving the indication of a change in the availability of a first network comprises performing at least one of an efficiency analysis and a least cost analysis between the first network and the second network for the first client application.
21. A method comprising:
   receiving, at a network appliance, an indication of a change in the availability or performance of a first data center at a remote server;
   identifying a first client application associated with the first data center;
   determining, at the network appliance, that a second data center at the remote server is an available alternative data center for the first client application;
   based on said determination, updating a data center identifier associated with the first client application to correspond to the available alternative data center;
   receiving, at the network appliance, first data for transmission from the first client application;
   retrieving the data center identifier associated with the first client application; and
   transmitting said first data to the remote server, said transmission to the remote server including the data center identifier corresponding to the available alternative data center.
22. The method of feature 21, wherein receiving the indication of a change in the availability or performance of the first data center comprises detecting either a failure or a performance degradation in the first data center.
23. The method of any of features 21 or 22, wherein determining the second data center is an available alternative data center for the first client application comprises:
   determining that the first client application can be supported by the second data center; and
   determining that a second client application cannot be supported by the second data center.
24. The method of any of features 21 to 23, wherein the first client application is not notified of the change in the availability or performance of the first data center, and is not notified that the transmission to the remote server included the data center identifier corresponding to the available alternative data center.

While illustrative systems and methods as described herein embodying various aspects of the present invention are shown, it will be understood by those skilled in the art, that the invention is not limited to these embodiments. Modifications may be made by those skilled in the art, particularly in light of the foregoing teachings. For example, each of the elements of the aforementioned embodiments may be utilized alone or in combination or sub-combination with elements of the other embodiments. It will also be appreciated and understood that modifications may be made without departing from the true scope of the present invention. The description is thus to be regarded as illustrative instead of restrictive on the present invention.

## Claims

1. A method comprising:
receiving, at a network appliance, an indication of a change in the availability or performance of a first network having a first transmission medium;
identifying a first client application associated with the first network;
determining a second network associated with the first client application having a second transmission medium different from the first transmission medium;
updating a network identifier associated with the first client application to correspond to the second network;
receiving, at the network appliance, a first transmission comprising first data from the first client application;
retrieving the network identifier associated with the first client application; and
based on said network identifier associated with the first client application, transmitting by the network appliance said first data over the second network.

2. The method of claim 1, wherein the first network is a terrestrial network and the second network is a wireless network.

3. The method of claim 2, wherein receiving the indication of a change in the availability of the first network comprises detecting either an outage or a performance degradation in the terrestrial network.

4. The method of any of claims 1 to 3, wherein determining the second network for the first client application is performed based on an amount of network usage of the first client application.

5. The method of any of claims 1 to 4, wherein the indication of a change in the availability of the first network corresponds to a decrease in the availability of the first network, the method further comprising:
after transmitting said first data over the second network, receiving an indication of an increase in the availability of the first network; and
updating the network identifier associated with the first client application to correspond to said first network.

6. The method of any of claims 1 to 5, further comprising:
prior to determining the second network for the first client application, receiving an indication of an overall usage level for the second network from a network monitoring device.

7. The method of any of claims 1 to 6, wherein determining the second network for the first client application is based on a determination that the first client application can be operated over to the second network and that a second client application cannot be operated over the second network.

8. The method of any of claims 1 to 7, further comprising:
identifying the first transmission from the first client application by matching a Internet protocol (IP) signature of the first transmission with an IP signature of a previous transmission from the first client application, wherein the IP signature of the first client application differs from an IP signature of a second client application.

9. The method of any of claims 1 to 8, wherein the first client application is not notified of the change in the availability of the first network, and is not notified that the first data was transmitted over the second network.

10. The method of any of claims 1 to 9, wherein receiving the indication of a change in the availability of a first network comprises performing at least one of an efficiency analysis and a least cost analysis between the first network and the second network for the first client application.

11. A network appliance comprising:
at least one processor; a
a plurality of network interfaces; and
at least one memory storing computer readable instructions that, when executed, cause the network appliance to operate in accordance with the method of any of the preceding claims.

12. A method comprising:
receiving, at a network appliance, an indication of a change in the availability or performance of a first data center at a remote server;
identifying a first client application associated with the first data center;
determining, at the network appliance, that a second data center at the remote server is an available alternative data center for the first client application;
based on said determination, updating a data center identifier associated with the first client application to correspond to the available alternative data center;
receiving, at the network appliance, first data for transmission from the first client application;
retrieving the data center identifier associated with the first client application; and
transmitting said first data to the remote server, said transmission to the remote server including the data center identifier corresponding to the available alternative data center.

13. The method of claim 12, wherein receiving the indication of a change in the availability or performance of the first data center comprises detecting either a failure or a performance degradation in the first data center.

14. The method of any of claims 12 or 13, wherein determining the second data center is an available alternative data center for the first client application comprises:
determining that the first client application can be supported by the second data center; and
determining that a second client application cannot be supported by the second data center.

15. The method of any of claims 12 to 14, wherein the first client application is not notified of the change in the availability or performance of the first data center, and is not notified that the transmission to the remote server included the data center identifier corresponding to the available alternative data center.
